(19) Europäisches Patentamt / European Patent Office / Office européen des brevets

(11) **EP 3 114 787 B1**

(12) **EUROPÄISCHE PATENTSCHRIFT**

(45) Veröffentlichungstag und Bekanntmachung des Hinweises auf die Patenterteilung:
**12.02.2020   Patentblatt 2020/07**

(21) Anmeldenummer: **15706723.2**

(22) Anmeldetag: **13.02.2015**

(51) Int Cl.:
*H04L 1/00* (2006.01)        *H04L 12/761* (2013.01)

(86) Internationale Anmeldenummer:
**PCT/EP2015/053096**

(87) Internationale Veröffentlichungsnummer:
**WO 2015/132065 (11.09.2015 Gazette 2015/36)**

(54) **VORRICHTUNG UND VERFAHREN ZUR DATENÜBERTRAGUNG**

DEVICE AND METHOD FOR DATA TRANSFER

DISPOSITIF ET PROCÉDÉ DE TRANSMISSION DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2014   DE 102014102898**

(43) Veröffentlichungstag der Anmeldung:
**11.01.2017   Patentblatt 2017/02**

(73) Patentinhaber: **Technische Universität München 80333 München (DE)**

(72) Erfinder:
• **DOTZLER, Andreas**
  **80333 München (DE)**
• **RIEMENSBERGER, Maximilian**
  **85386 Eching (DE)**
• **HEINDLMAIER, Michael**
  **84543 Winhöring (DE)**

(74) Vertreter: **Kastel, Stefan
Kastel Patentanwälte
St.-Cajetan-Straße 41
81669 München (DE)**

(56) Entgegenhaltungen:
**US-A1- 2010 023 525**

• **GOPALAKRISHNAN V ET AL: "CPM: Adaptive Video-on-Demand with Cooperative Peer Assists and Multicast", INFOCOM 2009. THE 28TH CONFERENCE ON COMPUTER COMMUNICATIONS. IEEE, IEEE, PISCATAWAY, NJ, USA, 19. April 2009 (2009-04-19), Seiten 91-99, XP031468749, ISBN: 978-1-4244-3512-8**
• **ZHENG YU XIE ET AL: "An advanced content delivery scheduling method for block multicast transfer", LOCAL COMPUTER NETWORKS, 2003. LCN '03. PROCEEDINGS. 28TH ANNUAL IEEE INTERNATIONAL CONFERENCE ON 20-24 OCT. 2003, PISCATAWAY, NJ, USA,IEEE, 20. Oktober 2003 (2003-10-20), Seiten 220-228, XP010665968, DOI: 10.1109/LCN.2003.1243131 ISBN: 978-0-7695-2037-7**

EP 3 114 787 B1

**Beschreibung**

Diese Anmeldung bezieht sich auf Vorrichtungen und Verfahren zur Datenübertragung, insbesondere auf Vorrichtungen und Verfahren, bei denen mehrere Nutzervorrichtungen in Gruppen zusammengefasst werden, und den Gruppen jeweils gleiche Datenpakete zugesendet werden.

Aus dem Stand der Technik sind Video-on-Demand (VoD)-Verfahren bekannt, bei denen Videodaten über ein drahtloses Netzwerk an Nutzervorrichtungen, in Fachkreisen auch User Devices (UD) genannt, übertragen werden. Bei den Nutzervorrichtungen kann es sich beispielsweise um Mobilvorrichtungen, Fernseher oder Ähnliches handeln. Bei einer VoD-Übertragung werden die Daten üblicherweise an die verschiedenen Nutzervorrichtungen über ein gemeinsames drahtloses Übertragungsmedium übertragen, das eine begrenzte Bandbreite aufweist. Ein solches Verfahren ist beispielsweise aus Gopalakrishnan et al., "CPM Adaptive Video-on-Demand with Cooperative Peer Assists and Multicast", The 28th Conference on Computer Communications, IEEE, Seiten 91-99, ISBN 978-1-4244-3512-8 bekannt.

Darüber hinaus ist eine drahtlose Übertragung beispielsweise aufgrund externer Störfelder oft unzuverlässig. Daher sind Verfahren zur Vorwärtsfehlerkorrektur, in Fachkreisen Forward Error Correction (FEC) genannt, und Feedback-Verfahren sowie Überwachungs- und Korrekturverfahren, bei denen auch andere Daten als die Nutzdaten ausgenutzt werden, entwickelt worden. Ferner ist bekannt, dass sowohl die Nutzervorrichtungen als auch die Zugriffspunkte, in Fachkreisen Access Points (AP) genannt, von denen die Nutzdaten an die Nutzervorrichtungen übertragen werden, Teile der Nutzdaten speichern können.

Darüber hinaus sind aus dem Stand der Technik Verfahren bekannt, bei denen Daten unabhängig an jeden Empfänger gesendet werden (Unicast), oder bei denen Daten unabhängig an jede Gruppe von Empfängern gesendet werden (Multicast). Um eine hohe Qualität der Übertragung zu gewährleisten, können die einzelnen Datenströme jeweils unabhängig FECkodiert werden.

US 2010 / 0 023 525 A1 offenbart eine Mediencontainerdatei, die in Medienquellblöcken organisierte Mediendaten umfasst. Vorwärtsfehlerkorrektur wird im Voraus berechnet für unterschiedliche Quellblöcke und in die Containerdatei als unterschiedliche FEC-Behälter eingebracht. Die Containerdatei umfasst auch Metadaten, die eine Zuordnung zwischen den Medienquellblöcken und den jeweiligen FEC-Behältern ermöglicht. Die Containerdatei kann von einem Medienserver verwendet werden, um Mediendatenpakete zum Übertragen an Nutzergeräte zur Verfügung zu stellen.

Es ist daher die Aufgabe der Erfindung, mehreren Nutzervorrichtungen eine oder mehrere Dateien oder Teile davon auf effiziente und zuverlässige Weise bereitzustellen. Dabei ermöglicht es die Erfindung insbesondere, die Anzahl der übertragenen Datenpakete zu reduzieren.

Gemäß einem ersten Aspekt stellt die Erfindung ein Verfahren bereit, das von einem Access Point durchgeführt wird, und bei dem Anfragen von einer Anzahl von Nutzervorrichtungen empfangen werden, wobei jede der Anfragen einen oder mehrere angefragte Dateiblöcke zumindest einer Datei angibt, die nicht in einem Cache der Nutzervorrichtung gespeichert sind. Jede der Anfragen enthält ferner eine Angabe von im Cache der Nutzervorrichtung gespeicherten Datenblöcken. Eine Menge von Multicast-Gruppen wird basierend auf den empfangenen Anfragen bestimmt, wobei jede der Multicast-Gruppen eine Menge von Indices einer oder mehrerer der Nutzervorrichtungen und eine Menge von Indices der Dateiblöcke, die an die Nutzervorrichtungen, die in der Multicast-Gruppe indiziert sind, zu übertragen sind, enthält. Für jede Multicast-Gruppe der Menge werden die Dateiblöcke, die in der Multicast-Gruppe indiziert sind, abgerufen und enkodiert, wobei ein Vorwärtsfehlerkorrekturverfahren verwendet wird. Für jede der Multicast-Gruppen der Menge werden die in der Multicast-Gruppe indizierten enkodierten Dateiblöcke an die in der Multicast-Gruppe indizierten Nutzervorrichtungen übertragen, wobei zumindest zwei der in zumindest einer der Multicast-Gruppen der Menge indizierten Dateiblöcke Teile unterschiedlicher Dateien sind.

Die Nutzervorrichtung kann daher ausgehend von den lokal verfügbaren Dateiblöcken, die beispielsweise in einem Cache der Nutzervorrichtung gespeichert sind, und den von dem Access Point empfangenen FEC-enkodierten Dateiblöcken die angefragte Datei wieder vollständig herstellen und insbesondere die in dem Cache fehlenden Dateiblöcke rekonstruieren. Durch die Kombination der in dem Cache der Nutzervorrichtung gespeicherten Dateiblöcke und der FEC-enkodierten Dateiblöcke wird die Anzahl der übertragenen Datenpakete deutlich reduziert. Die oben angegebene Aufgabe wird somit gelöst, wobei Multicast-Übertragungen, FEC-Kodierung und Caching verwendet werden. Ferner kann eine Multicast-Übertragung mehrerer Dateien gleichzeitig, d.h. im gleichen Verfahrensablauf erfolgen.

Die Dateiblöcke können beispielsweise Blöcke einer oder mehrerer Audiodateien, Videodateien oder anderer Dateien sein.

Gemäß einer bevorzugten Ausführungsform werden zumindest einige der Dateiblöcke, die in den Multicast-Gruppen der Menge indiziert sind, von einem oder mehreren Content-Servern abgerufen, wobei insbesondere eine zuverlässige Backhaul-Verbindung zwischen dem Access Point und dem einen oder den mehreren Content-Servern verwendet wird. Unter einer zuverlässigen Verbindung wird dabei eine Verbindung verstanden, bei der Acknowledgement (ACK)- und Automatic Repeat Request (ARQ)-Mechanismen in einer Verbindungsschicht, in Fachkreisen Link Layer genannt, verwendet werden. In einigen Ausführungsformen werden Dateiblöcke, die in den Multicast-Gruppen der Menge indiziert sind, und insbesondere in einer der Multicast-Gruppen der Menge indiziert sind, von zumindest zwei unterschiedlichen Content-Servern abgerufen.

Gemäß einer bevorzugten Ausführungsform werden mehrere Kandidatenmengen bestimmt und wird die Menge der Multicast-Gruppen basierend auf einem Vergleich eines effektiven Dienstvorteils und effektiver Multicast-Kosten für jede der Kandidatenmengen bestimmt. Das Bestimmen der Menge der Multicast-Gruppen kann insbesondere ein iteratives Verfahren umfassen.

Gemäß einer bevorzugten Ausführungsform wird der effektive Dienstvorteil beruhend auf einer tolerierbaren Verzögerung bei der Übertragung der Dateiblöcke, von den Nutzervorrichtungen empfangenen Prioritäten der Dateiblöcke, vorbestimmten Prioritäten der Nutzervorrichtungen und/oder von den Nutzervorrichtungen empfangenen Quality-of-Service-(QoS)-Erfordernissen bestimmt.

Gemäß einer bevorzugten Ausführungsform werden die effektiven Multicast-Kosten basierend auf der erwarteten Anzahl der Übertragungen, der erwarteten Gesamtdauer der Übertragungen an die Nutzervorrichtungen, die in den Multicast-Gruppen der Menge indiziert sind, Kanalqualitäten von Verbindungen zwischen dem Access Point und den Nutzervorrichtungen, die in den Multicast-Gruppen der Menge indiziert sind, und/oder Dauern und Geschwindigkeiten von Übertragungen an die Nutzervorrichtungen, die in den Multicast-Gruppen der Menge indiziert sind, bestimmt. Die Kanalqualität einer Verbindung zwischen dem Access Point und einer Nutzervorrichtung kann insbesondere von der Nutzervorrichtung an den Access Point übermittelt werden, so dass der Access Point eine Angabe über die Kanalqualität von der Nutzervorrichtung empfängt.

Gemäß einer bevorzugten Ausführungsform ist zumindest einer der in zumindest einer der Multicast-Gruppen der Menge indizierten Dateiblöcke ein unvollständiger Teil einer Datei. In dieser Ausführungsform können Teile von Dateien anstelle von vollständigen Dateien übertragen werden. Somit wird eine erneute Übertragung der gesamten Datei vermieden, wenn nur ein oder mehrere Teile der Datei bei der Nutzervorrichtung fehlen.

Gemäß einer bevorzugten Ausführungsform werden die enkodierten Dateiblöcke an die in der Multicast-Gruppe indizierten Nutzervorrichtungen über eine unzuverlässige, insbesondere drahtlose, Broadcast-Verbindung übertragen. Unter einer unzuverlässigen Verbindung wird dabei der oben angeführten Definition folgend eine Verbindung verstanden, bei der kein Acknowledgement (ACK)- und Automatic Repeat Request (ARQ)-Mechanismus in einer Verbindungsschicht, in Fachkreisen Link Layer genannt, verwendet wird.

Gemäß einer bevorzugten Ausführungsform werden Informationen über die Multicast-Gruppe an jede Nutzervorrichtung, die in der Multicast-Gruppe indiziert ist, übertragen, wobei die Informationen über die Multicast-Gruppe insbesondere die in der Multicast-Gruppe indizierten Nutzervorrichtungen und/oder die in der Multicast-Gruppe indizierten Dateiblöcke angeben.

Gemäß einer bevorzugten Ausführungsform wird eine Information über einen bei dem Vorwärtskorrekturverfahren verwendeten Vorwärtskorrekturcode an jede Nutzervorrichtung, die in der Multicast-Gruppe indiziert ist, übertragen.

Gemäß einer bevorzugten Ausführungsform werden beim Bestimmen der Menge von Multicast-Gruppen ausgehend von einer anfänglichen Menge $C_0=C^{start}$ in einer iterativen Prozedur in jedem Iterationsschritt eine erste Kandidatenmenge $C^{neu}$ und eine zweite Kandidatenmenge $C^{add}$ bestimmt. Diejenige aus der ersten und der zweiten Kandidatenmenge wird als Ergebnismenge $C_p$ für den Iterationsschritt bestimmt, die einen höheren Bewertungswert $P$ aufweist, wobei der Bewertungswert $P$ einen effektiven Dienstvorteil und effektive Multicast-Kosten für die Menge berücksichtigt. Die iterative Prozedur wird beendet, wenn weder die erste noch die zweite Kandidatenmenge einen höheren Bewertungswert als die Ergebnismenge für einen vorherigen Iterationsschritt aufweist.

Es ist besonders bevorzugt, dass das Bestimmen der ersten Kandidatenmenge $C^{neu}$ Folgendes umfasst:

(I.) für jede Nutzervorrichtung $m \in U$, von der eine Anfrage empfangen wurde, und für jeden angefragten Dateiblock $ij \in D_m$:

(a) Bilden einer Multicast-Gruppe $G' = (\{m\}, \{ij\})$,
(b) Bilden einer Menge $C' = C \cup \{G'\}$,
(c) Bestimmen des Bewertungswerts $P(C')$ für $C'$ und

(II.) Bestimmen als erste Kandidatenmenge ($C^{neu}$) diejenige Menge der in Schritt (I.) bestimmten Mengen ($C'$), welche den höchsten Bewertungswert $P$ aufweist.

Dabei bezeichnet $U$ die Menge der Nutzervorrichtungen, von denen eine Anfrage empfangen worden ist, und $D_m$ bezeichnet die Indexmenge der Dateiblöcke, die von einer Nutzervorrichtung $m \in U$ angefordert wurden. Es ist besonders bevorzugt, dass das Bestimmen der zweiten Kandidatenmenge $C^{add}$ Folgendes umfasst:

(I.) für jede Gruppe $G_k = (U_k, B_k) \in C_p$ der Ergebnismenge aus dem vorherigen Iterationsschritt und für jeden

angefragten Dateiblock $ij \in \cup_{m \in U} D_m$:

    (a) Bilden einer Multicast-Gruppe $G' = (U', B')$, wobei $U' = U_k$ und $B' = B_k \cup \{ij\}$,

    (b) solange der Bewertungswert $P$ von $C'$ zunimmt:

        (i.) für jede Nutzervorrichtung $m \in U \backslash U'$:

            (A.) Bilden einer Menge $C' = (C \backslash \{G_k\}) \cup \{(U' \cup \{m\}, B')\}$,
            (B.) Bestimmen des Bewertungswerts $P(C')$ für $C'$ und

        (ii.) Bestimmen als neues $G'$: $G' = (U' \cup \{m\}, B')$ für die Nutzervorrichtung $m$, für die in Schritt (i.) der höchste Bewertungswert bestimmt wurde,

    (c) Bilden der Menge $C' = (C \backslash \{G_k\}) \cup \{(U', B')\}$,
    (d) Berechnen des Bewertungswerts $P(C')$ für $C'$,

(II.) Bestimmen als zweite Kandidatenmenge $C^{add}$ die Menge der in Schritt (I.) gebildeten Menge $C'$ mit dem höchsten Bewertungswert.

In einigen Ausführungsformen wird der Bewertungswert ($P$) für eine Menge ($C$) von Multicast-Gruppen bestimmt als eine monoton zunehmende Funktion des effektiven Dienstvorteils ESB bei konstanten effektiven Multicast-Kosten EMC und als eine monoton abnehmende Funktion der effektiven Multicast-Kosten EMC bei konstantem effektivem Dienstvorteil ESB. Der Fachmann wird allerdings verstehen, dass in anderen Ausführungsformen der Bewertungswert ($P$) für eine Menge ($C$) von Multicast-Gruppen bestimmt werden kann als eine monoton abnehmende Funktion des effektiven Dienstvorteils ESB bei konstanten effektiven Multicast-Kosten EMC und als eine monoton zunehmende Funktion der effektiven Multicast-Kosten EMC bei konstantem effektivem Dienstvorteil ESB. In dem erstgenannten Fall ist ein hoher Wert von $P$ vorteilhaft, während im zweitgenannten Fall ein niedriger Wert von $P$ vorteilhaft ist. Da erfindungsgemäß beide Vorgehensweisen implementiert sein können, wird hier nur zum Zwecke einer einfacheren Beschreibung der erstgenannte Fall ausführlicher dargestellt.

Es ist besonders bevorzugt, dass der Bewertungswert $P$ für eine Menge $C$ von Multicast-Gruppen bestimmt wird als

$$P(C) = \alpha\,\mathrm{ESB}(C) - \beta\,\mathrm{EMC}(C), \qquad\qquad (1)$$

wobei ESB der effektive Dienstvorteil für die Gruppe C ist, EMC die effektiven Multicast-Kosten für die Gruppe C sind, und $\alpha$ und $\beta$ Konstanten, insbesondere nicht negative Konstanten, beispielsweise nicht negative reelle Zahlen sind.

Alternativ hierzu kann der Bewertungswert $P$ für eine Menge $C$ von Multicast-Gruppen bestimmt werden als

$$P(C) = \alpha\,\mathrm{ESB}(C)\,/\,\mathrm{EMC}(C), \qquad\qquad (2)$$

wobei ESB der effektive Dienstvorteil für die Gruppe C ist, EMC die effektiven Multicast-Kosten für die Gruppe C sind, und $\alpha$ eine Konstante, insbesondere eine nicht negative Konstante, beispielsweise eine nicht negative reelle Zahl ist.

Gemäß einem weiteren Aspekt der Erfindung wird ein Access Point bereitgestellt, der zum Durchführen des oben angegebenen Verfahrens eingerichtet ist. Der Access Point kann insbesondere ein Wireless Access Point sein, der für eine leitungslose Übertragung von Daten an Nutzervorrichtungen eingerichtet ist. Beispielsweise kann der Access Point ein WiFi Access Point oder eine LTE-Basisstation sein.

Gemäß einem weiteren Aspekt der Erfindung wird ein Verfahren bereitgestellt, bei dem eine Nutzervorrichtung eine Eingabe von einem Nutzer empfängt, wobei sich die Eingabe auf zumindest eine angefragte Datei bezieht. Die Nutzervorrichtung überträgt in Reaktion auf das Empfangen der Eingabe eine Anfrage an einen Access Point, wobei die Anfrage eine Angabe der zumindest einen angefragten Datei und eine Angabe von Dateiblöcken der angefragten Datei, die nicht in einem Cache der Nutzervorrichtung gespeichert sind, umfasst, wobei die Nutzervorrichtung ferner eine Angabe von in dem Cache gespeicherten Dateiblöcken an den Access Point überträgt. Die Nutzervorrichtung gehört einer Multicast-Gruppe, G, an. Die Multicast-Gruppe, G, enthält eine Menge von Indices, {m}, einer oder mehrerer Nutzervorrichtungen (20) und eine Menge von Indices, {ij}, der Dateiblöcke, die an die Nutzervorrichtungen, die in der Multicast-Gruppe, G, indiziert sind, zu übertragen sind. Die Nutzervorrichtung empfängt und dekodiert in Reaktion auf das Übertragen der Anfrage die in der Multicast-Gruppe, G, indizierten Dateiblöcke von dem Access Point. Dabei wird ein Vorwärtskorrekturverfahren verwendet. Zumindest zwei der in der Multicast-Gruppe, G, indizierten Dateiblöcke sind Teile unterschiedlicher Dateien.

Vor den genannten Verfahrensschritten kann das Verfahren ferner ein Empfangen einer Content-Liste mit Angaben über verfügbare Dateien von dem Access Point, ein Anzeigen der Angaben der verfügbaren Dateien und ein Empfangen einer Auswahl einer der verfügbaren Dateien von dem Nutzer als die angefragte Datei umfassen.

Gemäß einer bevorzugten Ausführungsform empfängt die Nutzervorrichtung einen oder mehrere enkodierte Dateiblöcke der angefragten Datei von dem Access Point und dekodiert sie, wobei ein Vorwärtskorrekturverfahren verwendet wird.

Gemäß einer bevorzugten Ausführungsform empfängt die Nutzervorrichtung eine Angabe eines Vorwärtskorrekturcodes von dem Access Point und verwendet den angegeben Vorwärtskorrekturcode bei dem Dekodieren der empfangenen enkodierten Dateiblöcke.

Gemäß einem weiteren Aspekt der Erfindung wird eine Nutzervorrichtung bereitgestellt, die zum Durchführen des oben angegeben Verfahrens eingerichtet ist. Die Nutzervorrichtung kann beispielsweise eine Mobilvorrichtung sein, wie z.B. ein Smartphone oder ein Tablet-PC, obwohl die Erfindung in dieser Hinsicht nicht eingeschränkt ist.

Gemäß einem weiteren Aspekt der Erfindung wird ein maschinenlesbares Medium bereitgestellt, das darauf gespeicherte Instruktionen enthält, die, wenn sie von einer Vorrichtung ausgeführt werden, bewirken, dass die Vorrichtung ein Verfahren der oben beschriebenen Art ausführt.

Der Fachmann wird weitere Merkmale und Vorteile der vorliegenden Erfindung anhand der folgenden detaillierten Beschreibung sowie der beigefügten Zeichnungen verstehen. Darin zeigt

Fig. 1    ein schematisches Blockdiagramm eines Multicast-Systems, einschließlich eines Wireless Access Points gemäß einer Ausführungsform und mehrerer Nutzervorrichtungen gemäß einer Ausführungsform,

Fig. 2    ein schematisches Blockdiagramm eines Access Points gemäß einer Ausführungsform,

Fig. 3    ein schematisches Blockdiagramm einer Nutzervorrichtung gemäß einer Ausführungsform,

Fig. 4    ein Flussdiagramm eines Abschnitts eines Verfahrens gemäß einer Ausführungsform zum Bestimmen einer Menge von Multicast-Gruppen und

Fig. 5    einen Graphen, der die relative Performance-Zunahme bei Verwendung eines Verfahrens gemäß einer Ausführungsform der vorliegenden Erfindung für verschiedene Popularitätsverteilungen abgerufener Videoinhalte darstellt.

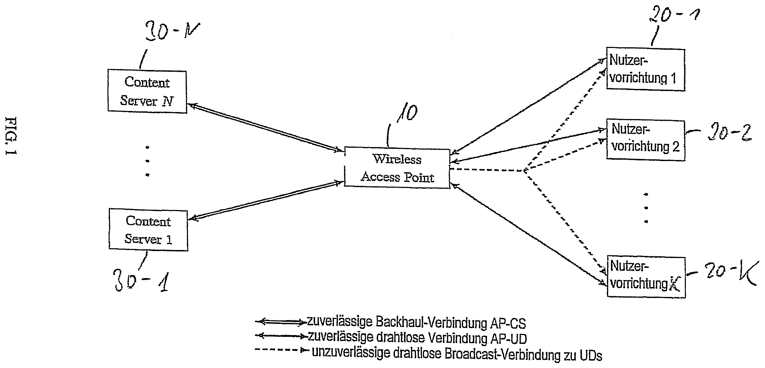

Figur 1 zeigt ein schematisches Blockdiagramm eines Multicast-Systems mit einem Wireless Access Point (AP) 10 und mehreren Nutzervorrichtungen (User Devices - UD) 20-1, 20-2, ..., 20-K gemäß Ausführungsformen der Erfindung. Das System kann beispielsweise dazu in der Lage sein, Videodaten, Audiodaten und/oder Daten eines anderen Datentyps an eine oder mehrere der Nutzervorrichtungen 20-1, 20-2, ..., 20-K zu liefern.

Bei dem in Figur 1 dargestellten System sind $N \geq 1$ Content-Server (CS) 30-1, ..., 30-N (hier kollektiv mit der Bezugszahl 30 bezeichnet) vorgesehen. Die CS enthalten jeweils ein physisches Speichermedium, auf dem Nutzdaten abgelegt sind. Wie eingangs erwähnt, kann es sich bei den Nutzdaten beispielsweise um Videodaten und/oder Audiodaten handeln. Es kann vorgesehen sein, dass jeder CS 30 beispielsweise eine oder mehrere vollständige Dateien, beispielsweise vollständige Audiodateien oder Videodateien, oder einen oder mehrere Teile von Dateien, insbesondere Dateiblöcke, speichert.

Die verschiedenen CS 30 sind mit dem AP 10 über eine zuverlässige Backhaul-Verbindung verbunden. Die Backhaul-Verbindungen zwischen dem AP 10 und den CS 30 kann drahtlos oder drahtgebunden sein. Der AP 10 ist ferner über eine zuverlässige drahtlose Verbindung mit mehreren Nutzervorrichtungen 20-1, 20-2, ..., 20-K (hier kollektiv mit der Bezugszahl 20 bezeichnet) verbunden. Jede Nutzervorrichtung 20 ist mit dem AP 10 über eine zuverlässige drahtlose Verbindung verbunden. Unter einer zuverlässigen Verbindung wird dabei, wie oben bereits angemerkt worden ist, eine Verbindung, in Fachkreisen auch Link genannt, verstanden, bei der Acknowledgement (ACK)- und Automatic Repeat Request (ARQ)-Mechanismen in einer Verbindungsschicht, in Fachkreisen Link Layer genannt, verwendet werden. Das Verwenden von ACK- und ARQ-Mechanismen gewährleistet eine Zuverlässigkeit der drahtlosen Kommunikation, wenn gewisse Minimalbedingungen bezüglich des Kanals zwischen dem AP 10 und den Nutzervorrichtungen 20 erfüllt sind. Zusätzlich kann der AP 10 Pakete an eine, an einige oder an alle Nutzervorrichtungen 20 über einen unzuverlässigen Broadcast-Kanal senden, wobei Pakete probabilistisch verloren gehen und keine ACK- und ARQ-Mechanismen in der Verbindungsschicht eingesetzt werden.

Im Betrieb fragen eine, einige oder alle der Nutzervorrichtungen 20 bestimmte Teile, insbesondere Dateiblöcke, bestimmter Dateien, beispielsweise bestimmter Video- oder Audiodateien nach, die von einem oder mehreren der CS 30 über den AP 10 bereitgestellt werden. Andererseits verfügt jede Nutzervorrichtung 20 möglicherweise bereits über einige oder alle Dateiblöcke einiger Dateien, die in einem lokalen Cache der Nutzervorrichtung 20 gespeichert sind. Das System gemäß einer Ausführungsform der Erfindung verwaltet die Anfragen der Nutzervorrichtungen 20 und bedient diese, wobei die lokalen Caches in den Nutzervorrichtungen 20 und in der AP 10 dazu verwendet werden, den Traffic auf der Backhaul-Verbindung und auf den drahtlosen Verbindungen zu reduzieren. Um dies zu erreichen, gruppiert der AP 10 die Nutzervorrichtungen 20 mit ihren Anfragen und Cache-Inhalten, wobei die Anfragen mit den Cache-Inhalten verglichen werden und ein FEC-Code auf der unzuverlässigen Broadcast-Verbindung an die Nutzervorrichtungen 20 verwendet wird.

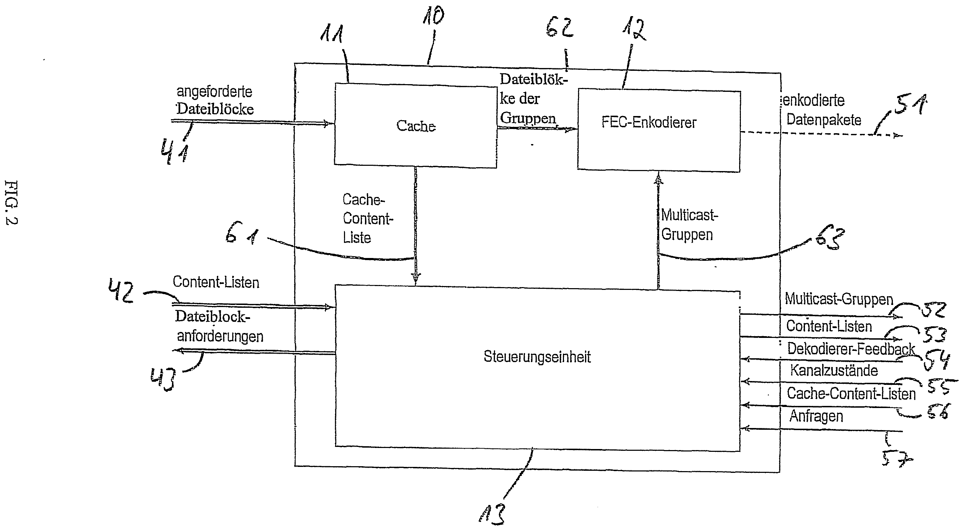

Figur 2 zeigt ein schematisches Blockdiagramm eines Access Points 10 gemäß einer Ausführungsform der Erfindung. Bei dem Access Point 10 kann es sich beispielsweise um einen WiFi-Access Point, eine LTE-Femtozellen-Vorrichtung, eine LTE-Basisstation oder Ähnliches handeln. Der AP 10 enthält einen Content-Cache 11, einen FEC-Enkodierer 12 und eine Multicast-Steuerungseinheit 13, die in Fachkreisen auch Multicast-Control-Unit (MCU) genannt wird. Der AP 10 erhält Content-Listen 42 von den CS 30. Die Content-Listen 42 enthalten Angaben über Inhalte, in Fachkreisen Content genannt, die von den Content-Servern 30 verfügbar sind und beispielsweise dort gespeichert sind. In größerem Detail empfängt die Steuerungseinheit 13 des AP 10 die Content-Listen 42 und verwaltet die Daten-Enkodierung und -Bereitstellung an die Nutzervorrichtungen 20. Die Steuerungseinheit 13 leitet die Content-Listen 42 an die Nutzervorrichtungen 20 weiter (siehe Bezugszahl 53 in Figur 2), so dass die Nutzer erfahren, welche Inhalte verfügbar sind, und einen oder mehrere Inhalte aus den Listen auswählen können. Die Nutzervorrichtungen 20 geben daraufhin ihre Anfragen 57 aus, die von der Steuerungseinheit 13 des AP 10 empfangen werden. Die Anfragen 57 der Nutzervorrichtungen enthalten jeweils eine Liste von Dateiblöcken, welche die Nutzervorrichtung anfordert. In einigen Ausführungsformen enthalten die Anfragen 57 zusätzlich eine Prioritätsangabe für einen oder mehrere der in den Anfragen 57 enthaltenen Dateiblöcke. Ferner übermitteln die Nutzervorrichtungen 20 Cache-Content-Listen 56 an den AP 10, und im größeren Detail an die Steuerungseinheit 13 des AP 10. Die Cache-Content-Listen 56 enthalten Angaben darüber, welche Teile von Dateien in dem Cache der Nutzervorrichtung 20 gespeichert sind. Darüber hinaus senden die Nutzervorrichtungen 20 Kanalzustandsinformationen 55, in Fachkreisen Channel State Information (CSI) genannt, bezüglich der unzuverlässigen Broadcast-Verbindung an den AP 10. Die Kanalzustandsinformationen 55 können beispielsweise Paketausfallsraten enthalten.

Die Steuerungseinheit 13 des AP 10 empfängt von dem lokalen Cache 11 des AP 10 ferner eine Liste 61 der in dem Cache 11 verfügbaren Inhalte. Anschließend fordert der AP 10 von den CS 30 diejenigen Teile von Dateien an (Dateiblöcke 43), die nicht lokal in dem Cache 11 des AP 10 gespeichert sind, aber von mindestens einer Nutzervorrichtung 20 vom AP 10 angefordert wurden, und speichert die von den CS 30 in Reaktion darauf empfangenen Dateiblöcke (Bezugszahl 41) in dem Cache 11.

Aus den Anfragen 57 der Nutzervorrichtungen 20, den Cache-Content-Listen 56 der Nutzervorrichtungen 20 und den Kanalzustandsinformationen 55 bestimmt die Steuerungseinheit 13 des AP 10 Multicast-Gruppen, d.h. Paare von Mengen von Nutzervorrichtungen 20 und Mengen von Dateiblöcken, so dass die Dateiblöcke der Gruppe an alle Nutzervorrichtungen 20 der Gruppe in einer Multicast-Übertragung gesendet werden. Die Bestimmung dieser Gruppen wird unten mit Bezug auf die Steuerungseinheit 13 noch näher erläutert werden.

Die Steuerungseinheit 13 des AP 10 sendet eine Multicast-Gruppen-Nachricht 52 an die Nutzervorrichtungen 20 der entsprechenden Multicast-Gruppe. Die Multicast-Gruppen-Nachricht 52 enthält eine Angabe über die von der Steuerungseinheit 13 bestimmten Multicast-Gruppen, wie beispielsweise die in der Gruppe enthaltenen Dateiblöcke und/oder Nutzervorrichtungen. Auf diese Weise werden die Nutzervorrichtungen 20 darüber informiert, welche Dateiblöcke sie empfangen und dekodieren müssen. Darüber hinaus sendet die Steuerungseinheit 13 des AP 10 eine Multicast-Gruppen-Nachricht 63 an den FEC-Enkodierer 12 des AP 10, so dass der FEC-Enkodierer 12 die Dateiteile für jede der Multicast-Gruppen separat kombinieren und enkodieren kann. Der FEC-Enkodierer 12 lädt die benötigten Dateiteile aus dem Cache 11 (Dateiblöcke 62) und erzeugt enkodierte Datenpakete 51 für jede Gruppe, die dann von dem FEC-Enkodierer 12 an die Nutzervorrichtungen 20 übertragen werden, wobei die unzuverlässige Broadcast-Verbindung verwendet wird. Es kann vorgesehen sein, dass jede Nutzervorrichtung 20 nur diejenigen Datenpakete 51 empfängt und dekodiert, die zu einer Multicast-Gruppe gehören, welcher die Nutzervorrichtung 20 selbst angehört. Alternativ kann zumindest eine der Nutzervorrichtungen 20 auch Datenpakete 51, die zu einer Multicast-Gruppe gehört, welcher die Nutzervorrichtung 20 nicht angehört, empfangen, in dem Cache der Nutzervorrichtung 20 speichern und optional vor dem Speichern dekodieren. Letzteres kann sinnvoll sein, um den Cache der Nutzervorrichtung 20 mit Dateiteilen zu füllen, welche zukünftig möglicherweise bei der Nutzervorrichtung 20 gebraucht werden. Damit kann die Anzahl der notwendigen Übertragungen in der Zukunft verringert werden. Der FEC-Enkodierer 12 beendet das Erzeugen von Paketen für eine Multicast-Gruppe, wenn eine Abbruchbedingung erfüllt ist. Die Abbruchbedingung kann beispielsweise vorsehen, dass die Steuerungseinheit 13 von allen Nutzervorrichtungen 20 der Multicast-Gruppe ein Dekodierer-Feedback 54 erhalten hat, womit die Nutzervorrichtungen 20 dem AP 10 anzeigen, dass sie alle Dateiteile der Multicast-Gruppe erfolgreich dekodiert haben. Alternativ oder zusätzlich kann die Abbruchbedingung einen Ablauf einer vorgegebenen Zeitdauer, in Fachkreisen Timeout genannt, oder ein Erreichen einer vorgegebenen maximalen Anzahl von erzeugten Paketen enthalten.

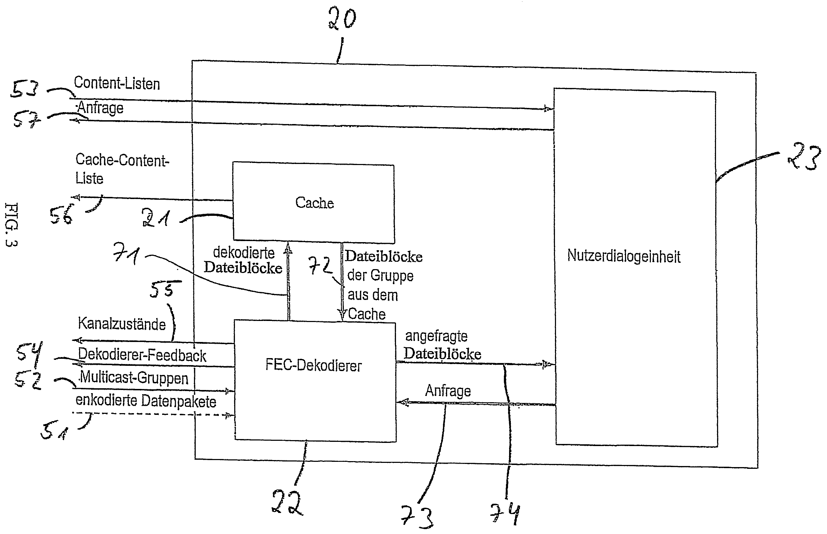

Figur 3 zeigt ein schematisches Blockdiagramm einer Nutzervorrichtung 20 gemäß einer Ausführungsform. Die Nutzervorrichtung 20 enthält einen Content-Cache 21, einen FEC-Dekodierer 22 und eine Nutzerdialogeinheit 23, in Fachkreisen auch User Interaction Unit genannt. Der FEC-Dekodierer 22 entspricht dem FEC-Enkodierer 12 des AP 10, wie er beispielsweise in Figur 2 gezeigt ist, d.h. er ist zur Dekodierung von Dateiblöcken, die von dem FEC-Enkodierer 12 des AP 10 enkodiert wurden, eingerichtet. Die Nutzerdialogeinheit 23 empfängt die Content-Liste 53 von dem AP 10. Die Nutzerdialogeinheit 23 zeigt die empfangenen Content-Listen 53 für den Nutzer an. Hierzu kann die Nutzerdialogeinheit 23 mit einer Anzeige, beispielsweise einem Bildschirm, verbunden sein, oder eine solche enthalten. Ferner ist die Nutzerdialogeinheit 23 dazu eingerichtet, eine Content-Auswahl eines Nutzers zu empfangen und in einer Anfrage 57 nach Dateien oder Dateiblöcken zu übersetzen. Die Nutzerdialogeinheit 23 der Nutzervorrichtung 20 sendet die Anfrage 57 an die AP 10, sowie eine Kopie der Anfrage 73 an den FEC-Dekodierer 22. Der FEC-Dekodierer 22 wird somit darüber informiert, welche dekodierten Dateiblöcke er an die Nutzerdialogeinheit 23 zurückgeben soll und welche nicht. Zusätzlich teilt die Nutzervorrichtung 20 dem AP 10 den Inhalt seines Cache 21 anhand der Übermittlung einer Cache-Content-Liste 56 mit. Ferner übermittelt der FEC-Dekodierer 22 der Nutzervorrichtung 20 die Kanalzustände mittels einer Kanalzustandsmitteilung 55 an den AP 10.

In der gezeigten Ausführungsform sendet der FEC-Dekodierer 22 ferner ein Dekodierer-Feedback 54 an den AP 10, wenn der FEC-Dekodierer 22 alle Dateiteile der Multicast-Gruppe erfolgreich dekodiert hat. Wie oben mit Hinblick auf Fig. 2 bereits beschrieben worden ist, kann das Dekodierer-Feedback 54 von dem AP 10 verwendet werden, um festzustellen, ob die Abbruchbedingung erfüllt ist. In Ausführungsformen, in denen eine andere Abbruchbedingung als der Empfang des Dekodierer-Feedbacks 54 bei dem AP 10 implementiert ist, kann jedoch vorgesehen sein, dass der FEC-Dekodierer 22 kein Dekodierer-Feedback 54 an den AP 10 sendet.

In die umgekehrte Richtung wird die Nutzervorrichtung 20 von dem AP 10 über die Struktur der bestimmten Multicast-Gruppen anhand einer Multicast-Gruppen-Nachricht 52 informiert. Die Multicast-Gruppen-Nachricht 52 enthält insbesondere Angaben über die in der Multicast-Gruppe enthaltenen Dateiblöcke und den ausgewählten FEC-Code. Ferner wird die Nutzervorrichtung 20 von dem AP 10 informiert, dass sie der Multicast-Gruppe angehört. Dies kann beispielsweise umfassen, dass die Multicast-Gruppen-Nachricht 52 eine Angabe über die in der Multicast-Gruppe enthaltenen Nutzervorrichtungen 20 enthält. Alternativ oder zusätzlich kann beispielsweise die Multicast-Gruppen-Nachricht 52 selektiv nur an diejenigen Nutzervorrichtungen gesendet werden, die in der Multicast-Gruppe enthalten sind. Außerdem empfängt die Nutzervorrichtung 20 enkodierte Datenpakete 51, die zu der Multicast-Gruppe gehören, an welcher die Nutzervorrichtung 20 teilnimmt, von dem AP 10. Die enkodierten Datenpakete 51 werden dem FEC-Dekodierer 22 der Nutzervorrichtung 20 zugeführt, zusätzlich zu den zur Multicast-Gruppe gehörenden Dateiblöcken 72, die im Cache 21 der Nutzervorrichtung 20 gespeichert sind, um fehlende Dateiblöcke der entsprechenden Multicast-Gruppe wiederherzustellen, d. h. diejenigen Dateiblöcke, die nicht in dem lokalen Cache 21 der Nutzervorrichtung 20 gespeichert sind. Die dekodierten Dateiblöcke 71 werden von dem FEC-Dekodierer 22 an den Cache 21 der Nutzervorrichtung 20 übermittelt, der die dekodierten Dateiblöcke 71 optional speichert. Diejenigen dekodierten Dateiblöcke 74, die in der Anfrage 57 angefragt worden sind, werden von dem FEC-Dekodierer 22 an die Nutzerdialogeinheit 23 übermittelt. Die Nutzerdialogeinheit 23 ist dazu ausgelegt, die angefragten Dateiblöcke 74 abzuspielen, d. h. beispielsweise angefragte Videodateien auf einer Anzeige wiederzugeben und/oder angefragte Audiodateien über ein Audiogerät wiederzugeben.

In der gezeigten Ausführungsform kann der AP 10 aus der Anfrage 57 der Nutzerdialogeinheit 23 und der Cache-Content-Liste 56 bestimmen, welche Dateiblöcke die Nutzervorrichtung 20 benötigt. In einer alternativen Ausgestaltung ist der Cache 21 mit der Nutzerdialogeinheit 23 gekoppelt, so dass die Nutzerdialogeinheit die Cache-Content-Liste 56 von dem Cache 21 empfängt. In diesem Fall kann vorgesehen sein, dass die Anfrage 57 der Nutzerdialogeinheit 23 nur die in dem Cache 21 fehlenden Dateiblöcke enthält. In jedem Fall ist es jedoch vorteilhaft, wenn die vollständige Cache-Content-Liste der Nutzervorrichtung 20 dem AP 10 mitgeteilt wird, damit die Gruppierung optimale Ergebnisse liefert. In alternativen Ausführungsformen, in denen die Nutzervorrichtungen 20 nur Teile ihres Cache-Inhalts dem AP 10 melden, ist dies effektiv für den Algorithmus so, als wären nur diese gemeldeten Teile im Cache 21 der Nutzervorrichtung 20 gespeichert.

Im Folgenden wird der Betrieb der Steuerungseinheit 13 des AP 10 anhand eines Verfahrens gemäß einer Ausführungsform der Erfindung näher erläutert werden.

Die Steuerungseinheit 13 empfängt Dateien, die in Blöcke unterteilt sind. Die Größe eines Blocks beträgt $F_{ij}$ für jeden Block $j$ der Datei $i$. Die Steuerungseinheit 13 empfängt die Blöcke von einem Content-Provider, wie beispielsweise einem Content Server 30, wie er in Figur 1 dargestellt ist. Die Steuerungseinheit 13 kann einige oder alle der empfangenen Blöcke einiger oder aller Dateien lokal speichern, beispielsweise in dem Cache 11 des AP 10. Bei den Dateien kann es sich beispielsweise um Audio- oder Videodateien handeln, die ein Nutzer angefragt hat.

Die Menge aller Dateiblöcke $ij$ wird als $B$ bezeichnet. $I_0 \subset B$ ist die Menge von Indexpaaren derjenigen Dateiblöcke $ij \in B$, die lokal bei der Steuerungseinheit 13 gespeichert sind. Eine Menge $U$ von Nutzervorrichtungen fordert einige der Dateiblöcke aus $B$ an, aber hat ebenso einige Blöcke lokal gespeichert. Um die Steuerungseinheit 13 von der Anforderung und dem Cacheinhalt zu informieren, übermittelt jede Nutzervorrichtung $m \in U$ den in ihrem lokalen Cache 21 gespeicherten Cacheinhalt $I_m \subset B$, wie durch die Bezugszahl 56 in den Figuren 2 und 3 dargestellt ist, d. h. die Menge von Indexpaaren $ij$ der Dateiblöcke, die in dem Cache 21 der Nutzervorrichtung $m$ gespeichert sind. Ferner übermittelt die Nutzervorrichtung 20 ihre Anfrage 57 nach Dateiblöcken an die Steuerungseinheit 13 des AP 10, wobei die Anfrage 57 einen Bedarf $D_m \subset B$ enthält, d. h. die Menge von Indexpaaren $ij$ der Dateiblöcke, welche die Nutzervorrichtung $m \in U$ von der Steuerungseinheit 13 anfordert. Optional kann die Nutzervorrichtung 20 ferner Prioritäten $W_{m,ij}$ bezüglich der angeforderten Dateiblöcke an die Steuerungseinheit 13 übermitteln. Darüber hinaus übermittelt jede Nutzervorrichtung für einige oder alle Modulations- und Kodierschema-Indices $k$, in Fachkreisen Modulation and Coding Scheme (MCS)-Indices genannt, einen Kanalqualitätsindikator $Q_{m,k}$, wie beispielsweise das Signalrauschverhältnis (SNR), die empfangene Leistung, die Wahrscheinlichkeit für einen erfolgreichen Empfang $P_{m,k}$ von Dateiblöcken, etc.

Aus dieser Menge von Informationen bildet die Steuerungseinheit 13 Multicast-Gruppen von Nutzervorrichtungen und Dateiblöcken, die jeweils durch ein Paar $G = (U_G, B_B)$ bezeichnet werden, wobei $U_G \subset U$ die Menge von Nutzervorrichtungen ist und $B_G \subset B$ eine Menge von Dateiblöcken ist. Für jede Multicast-Gruppe erzeugt und übermittelt die Steuerungseinheit 13 Pakete aus kodierten Informationen, die aus den Dateiblöcken mit Indices innerhalb von $B_G$ erzeugt worden sind, bis eine Abbruchbedingung für diese Gruppe erfüllt ist, wie sie z.B. oben erläutert worden ist. Beispielsweise kann die Abbruchbedingung umfassen, dass ein Dekodierer-Feedback 54 empfangen wird, in dem die Nutzervorrichtungen der Gruppe der Steuerungseinheit 13 mitteilen, dass sie die Dateiblöcke erfolgreich dekodiert haben, eine vorgegebene Zeitdauer überschritten ist, oder eine vorgegebene maximale Anzahl von Paketen erzeugt und übermittelt wurde. Eine Nutzervorrichtung 20 hat die Dateiblöcke einer Multicast-Gruppe $G$ erfolgreich dekodiert, wenn der FEC-Dekodierer 22 der Nutzervorrichtung 20 alle Dateiblöcke in $B_G$ aus den im Cache enthaltenen Dateiblöcken der Gruppe $G$ und aus den empfangenen zur Gruppe $G$ gehörenden Datenpaketen bestimmen kann. Die enkodierten Datenpakete 51 werden erzeugt, indem z.B. ein Rateless Forward Error Correcting (FEC)-Code, wie beispielsweise ein Raptor-Code, verwendet wird.

Wie oben erläutert worden ist, ist eine Multicast-Gruppe $G$ ein Paar $G = (U_G, B_G)$ bestehend aus einer Menge von Nutzervorrichtungen $U_G \subset U$ und einer Menge von Dateiblöcken $B_G \subset B$ für jede der Nutzervorrichtungen, so dass jede Nutzervorrichtung $m \in U_G$ alle Dateiblöcke $ij \in B_G$ aus den von dem AP 10 übertragenen enkodierten Datenpaketen 51 und dem Inhalt seines lokalen Caches 21 wiederherstellen kann. Funktionen ESB und EMC weisen jeder Menge von Gruppen $C = G_1, ..., G_k$ einen effektiven Dienstvorteil (Effective Service Benefit - ESB) bzw. die effektiven Multicast-Kosten (Effective Multicast Cost - EMC) zu.

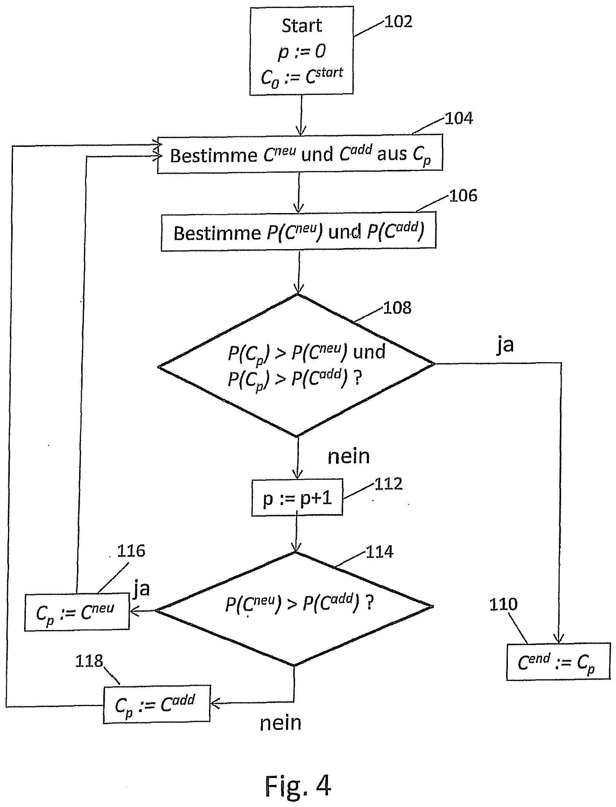

Um eine Menge $C$ von Multicast-Gruppen mit hohem ESB und geringem EMC zu bestimmen, wird gemäß einigen Ausführungsformen der Erfindung ein Abschnitt eines Verfahrens durchgeführt, das im Folgenden beschrieben wird. Parallel hierzu stellt Fig. 4 den Abschnitt des Verfahrens in Form eines Flussdiagramms dar.

Das Verfahren beginnt in Schritt 102 mit einer Anfangsmenge $C_0 = C^{\text{start}}$ von Multicast-Gruppen. In einigen Ausführungsformen ist $C_0$ leer. Beginnend mit einem Zählwert $p = 0$ wird nun das folgende iterative Verfahren durchgeführt.

Bei Schritt 104 werden neue Kandidatenmengen $C^{\text{neu}}$ und $C^{\text{add}}$ aus der Ergebnismenge $C_p$ des vorherigen Iterationsschritts $p$ bestimmt, wobei die im Folgenden erläuterten Operationen "neu" bzw. "add" verwendet werden. Für jede der Kandidatenmengen $C^{\text{neu}}$ und $C^{\text{add}}$ wird anschließend in einem Schritt 106 ein Bewertungswert anhand einer Funktion $P$ bestimmt, die weiter unten näher erläutert werden wird. In einem anschließenden Schritt 108 wird bestimmt, ob der Bewertungswert $P(C_p)$ für die Ergebnismenge $C_p$ der vorherigen Iteration größer als die Bewertungswerte für beide Kandidatenmengen $C^{\text{neu}}$ und $C^{\text{add}}$ ist. Falls dies der Fall ist, endet das Verfahren bei Schritt 110 und die Ergebnismenge der vorherigen Iteration wird als Menge von Multicast-Gruppen für die Übertragung der in der Multicast-Gruppe indizierten Dateiblöcke verwendet.

Falls zumindest eine der Kandidatenmengen $C^{\text{neu}}$ und $C^{\text{add}}$ einen höheren Bewertungswert $P$ aufweist, wird der Zählwert in Schritt 112 um eins erhöht und in Schritt 114 bestimmt, ob der Bewertungswert von $C^{\text{neu}}$ größer als derjenige von $C^{\text{add}}$ ist. Falls ja, wird $C^{\text{neu}}$ in Schritt 116 als Ergebnismenge der laufenden Iteration verwendet. Falls nein, wird $C^{\text{add}}$ in Schritt 118 als Ergebnismenge der laufenden Iteration verwendet. Anschließend fährt das Verfahren in Schritt 104 mit dem Bestimmen neuer Kandidatenmengen für einen nächsten Iterationsschritt fort.

Die oben erwähnte Operation "neu" umfasst dabei die folgenden Schritte:

Schritt 1: für jede Nutzervorrichtung $m \in U$ und für jeden Bedarf $ij \in D_m$:

        (a) Bilde $G' = (\{m\}, \{ij\})$.
        (b) Bilde die Menge $C' = C \cup \{G'\}$.
        (c) Berechne den Bewertungswert $P$ von $C'$.

Schritt 2: Nimm als $C^{\text{neu}}$ die Menge der in Schritt 1 berechneten $C'$, die den höchsten Bewertungswert $P$ aufweist.

Die zuvor erwähnte Operation "add" umfasst die folgenden Schritte:

Schritt 1: für jede Gruppe $G_k = (U_k, B_k) \in C$ und für jeden angefragten Dateiblock $ij \in \cup_{m \in U} D_m$:

(a) $G' = (U', B')$, wobei $U' = U_k$ und $B' = B_k \cup \{ij\}$.

(b) solange der Bewertungswert $P$ zunimmt:

    (i.) für jede Nutzervorrichtung $m \in U \setminus U'$:

        A. bilde die Menge $C' = (C \setminus \{G_k\}) \cup \{(U' \cup \{m\}, B')\}$

        B. berechne den Bewertungswert $P$ von $C'$.

    (ii.) Nimm als neues $G' = (U' \cup \{m\}, B')$ für die Nutzervorrichtung m mit dem höchsten Bewertungswert.

(c) Bilde die Menge $C' = (C \setminus \{G_k\}) \cup \{(U', B')\}$.

(d) Berechne den Bewertungswert $P$ von $C'$.

Schritt 2:    Nimm als $C^{add}$ die Menge der in Schritt 1 gebildeten Mengen $C'$ mit dem höchsten Bewertungswert.

Im vorangehend beschriebenen Verfahren kann der Bewertungswert beispielsweise aus dem effektiven Dienstvorteil (ESB) und den effektiven Multicast-Kosten (EMC) für die entsprechende Menge von Multicast-Gruppen bestimmt werden.

Der Effective Service Benefit (ESB)-Indikator, oder auch effektiver Dienstvorteil genannt, misst die Anforderungen an Prioritäten, Nutzen, Verzögerung und Quality-of-Service (QoS), die mit einer Menge von Gruppen in Beziehung stehen. Der ESB kann eine beliebige Kombination, wie beispielsweise eine abnehmende Funktion der tolerierbaren Verzögerung, bis eine Anfrage bedient sein muss, eine zunehmende Funktion der Nutzer- und Anfrageprioritäten, und/oder eine zunehmende Funktion der Nutzer- und Anfrage-QoS-Anforderung sein (beispielsweise eine Mindestgeschwindigkeitsanforderung oder eine Mindestqualitätsanforderung für Video/Audio).

Unter der Priorität wird dabei das Gewicht oder die Rangfolge, welche(s) die relative Bedeutung einer Anfrage eines Dateiblocks einer Nutzervorrichtung bestimmt, verstanden. Ein hohes Gewicht oder ein niedriger Rang einer Anfrage führt zu einem hohen ESB, wenn diese Anfrage der Nutzervorrichtung in einer Multicast-Gruppe bedient wird. Die Nutzervorrichtung kann dem AP diese Prioritäten zusammen mit der Anfrage mitteilen, z.B. in Form einer Reihenfolge von Dateiblöcken, die benötigt werden, und einer Angabe darüber, wie viel Verzögerung für jeden Dateiblock toleriert werden kann. Darüber hinaus kann der AP die Anfragen unter den Nutzervorrichtungen priorisieren. Quality-of-Service bezeichnet die Qualität, in welcher der angeforderte Inhalt benötigt wird, z.B. eine Auflösung und/oder eine Datenrate eines Videos, wobei dieser Inhalt einen oder mehrere angeforderte Dateiblöcke umfasst. Benötigen Nutzervorrichtungen eine hohe Qualität, d.h. mehr und/oder größere Dateiblöcke in kürzerer Zeit, dann kann der AP sie höher priorisieren. Daraus ermitteln werden die Prioritätskoeffizienten $W_{m,ij}$ für jeden angefragten Dateiblock $ij \in D_m$ jeder Nutzervorrichtung $m \in U$ ermittelt. Der ESB kann aus den Prioritäten und der effektiven Datenrate berechnet werden, z.B. als das Verhältnis

$$ij \in \bigcup_{G \in C} B_G \,,$$

zwischen der Summe über alle in einer Multicast-Gruppe enthalten Dateiblöcke    jeweils gewichtet mit der Summe der Prioritäten aller Nutzer, die diesen Dateiblock anfragen und zur entsprechenden Multicast-Gruppe gehören. Allerdings sind in anderen Ausführungsformen andere Definitionen des ESB möglich.

Der Effective Multicast Cost (EMC)-Indikator, oder auch effektive Multicast-Kosten genannt, umfasst die erwartete Anzahl von Übertragungen und ihre jeweiligen Dauer, wobei die Cache-Inhalte, die Content-Anfragen und die Kanalqualität jedes Mitglieds der Gruppe und zusätzlich die Länge einer Übertragung und ihre Geschwindigkeit, wie sie durch das Modulations- und Kodierschema (MCS) definiert ist, berücksichtigt werden.

Zunächst wird die erwartete Anzahl von Multicast-Übertragungen $EMTX_k$ für einen festen MCS-Index $k$ einer Gruppe $G = (U_G, B_G)$ folgendermaßen definiert:

$$EMTX_k(G) = \max_{m \in U_G} \frac{\sum_{ij \in B_G \setminus I_m} F_{ij}}{P_{m,k}}, \tag{3}$$

wobei $P_{m,k}$ die Wahrscheinlichkeit angibt, dass ein Paket mit dem MCS-Index $k$ bei der Nutzervorrichtung $m$ erfolgreich empfangen wird. Die erwartete Multicast-Übertragungszeit $EMTT_k$ für einen festen MCS-Index $k$ einer Gruppe $G$ ist gegeben durch

$$EMTT_k(G) = \frac{1}{R_k} EMTX_k(G). \qquad (4)$$

Die erwartete minimale Multicast-Übertragungszeit EMTT durch das Verwenden des besten MCS-Index aus einer Menge möglicher Indices ist gegeben durch

$$EMTT(G) = \min_k EMTT_k(G), \qquad (5)$$

wobei $R_k$ die Übertragungsgeschwindigkeit für den MCS-Index $k$ ist. Der EMC-Indikator einer Menge $C$ beruht auf einer gewichteten und möglicherweise transformierten Kombination der effektiven Multicast-Übertragungszeiten aller Gruppen in der Menge. Der EMC-Indikator kann zusätzliche Gruppierungsbedingungen berücksichtigen, indem einer Menge, die gegen eine oder mehrere der Bedingungen verstößt, ein Zuschlag auf die EMC zugeordnet wird, beispielsweise ein unendlich hoher Zuschlag.

EMC kann beispielsweise eine Summe, insbesondere gewichtete Summe, der $EMTT(G)$ über alle $G$ aus $C$ sein. In einigen Ausführungsformen sind größere Werte von $EMTT(G)$ schwächer oder stärker gewichtet, je nachdem, ob längere Multicasts mit größeren Gruppen erstrebenswert sind (niedrige Kosten durch schwächere Gewichtung hoher EMTTs) oder nicht (höhere Kosten durch stärkere Gewichtung hoher EMTTs). In einer anderen Ausführungsform sind die effektiven Kosten EMC definiert als die benötigte Multicast-Zeit $EMTT(G)$ für jede Gruppe in Beziehung zur benötigten Übertragungszeit, wenn alle Nutzeranfragen, die durch diese Gruppe bedient werden, einzeln bedient werden würden. Dabei kann z.B. die Differenz von $EMTT(G)$ zu der gesamten Referenzübertragungszeit für alle einzelnen Anfragen berücksichtigt werden. Der Wert von EMC kann in diesem Fall nicht nur so niedrig wie möglich, sondern z.B. auch negativ sein, weil er in diesem Fall die gesparte Zeit bezüglich der Referenz wiedergibt. Eine alternative Definition von EMC ist z.B. das Verhältnis der gesamten Übertragungszeit, d.h. der Summe der $EMTT(G)$ über alle $G$ in $C$, zu den insgesamt übertragenen Nutzdaten, also der Summe der Dateiblockgrößen aller Dateiblöcke $ij$, die in mindestens einer Multicast-Gruppe indiziert sind.

Die Beziehung zwischen ESB und EMC beschreibt den Bewertungswert, auch Performance genannt, so dass Dienst-Performance-Anforderungen, gemessen durch ESB, und Multicast-Kosten, gemessen durch EMC, berücksichtigt werden. Die Performance einer Menge von Multicast-Gruppen $C$ ist in einigen Ausführungsformen folgendermaßen definiert:

$$P(C) = \alpha\, ESB(C) - \beta\, EMC(C) \qquad (6)$$

mit zwei Konstanten $\alpha$ und $\beta$, welche die Größen ESB und EMC auf geeignete Weise skalieren und gewichten. Die Konstanten $\alpha$ und $\beta$ können beispielsweise nicht negative Zahlen, z.B. nicht negative reelle Zahlen sein. Die Performance-Funktion $P$ wird durch das oben angegebene Verfahren optimiert.

In einer alternativen Ausgestaltung kann der Bewertungswert z.B. definiert sein als

$$P(C) = \alpha\, ESB(C) / EMC(C), \qquad (7)$$

wobei $\alpha$ eine Konstante, insbesondere eine nicht negative Konstante ist.

Auch wenn die Funktion $P$ in einigen hier im Detail erläuterten Ausführungsformen so definiert ist, dass ein möglichst hoher Wert von $P$ erreicht werden soll, wird der Fachmann verstehen, dass alternativ hierzu in anderen Ausführungsformen eine Funktion definiert sein kann, bei der möglichst niedrige Werte erstrebenswert sind.

Gruppierbedingungen können notwendig sein, um zu gewährleisten, dass Nutzervorrichtungen nicht zu viele ungewünschte Dateiblöcke in großen Gruppen dekodieren müssen, wodurch eine allzu hohe Belastung bei den Berechnungsressourcen und bei der Akkumulatorlaufzeit der Nutzervorrichtung hervorgerufen werden können. Andere Bedingungen können notwendig sein, um die Limitierungen des FEC-Codes zu berücksichtigen. Mögliche Gruppierbedingungen umfassen die maximale Anzahl von Nutzervorrichtungen pro Gruppe, die maximale Anzahl von Gruppen, in denen eine Nutzervorrichtung enthalten sein kann, die maximale Gesamtgröße der Dateiblöcke in einer Gruppe, die maximale Anzahl von Gruppen, die einen bestimmten Dateiblock enthalten, etc.

In der oben beschriebenen Ausführungsform können Gruppierbedingungen über den EMC eingearbeitet sein. Zusätzlich oder alternativ können Gruppierbedindungen auf anderem Wege berücksichtigt werden:

Variante 1: Die Gruppierbedingungen werden direkt in den Algorithmus aufgenommen. Beispielsweise kann im Schritt 2 der oben beschriebenen Operation "neu" und in den Schritten 1(b)(ii.) und 2 der Operation "add" jeweils eingeschränkt werden, dass diejenige Menge, die den höchsten Bewertungswert aufweist und gleichzeitig die Gruppierbedingungen, falls vorhanden, erfüllt, ausgewählt wird.

Variante 2: Die Gruppierbedingungen können explizit in den Bewertungswert einfließen, so dass Mengen $C'$, welche die Gruppierbedingungen nicht erfüllen, einen sehr niedrigen Bewertungswert, z.B. negativ unendlich, erhalten. Der Bewertungswert kann z.B. wie folgt definiert sein:

$$P(C) = \alpha\, \mathrm{ESB}(C) - \beta\, \mathrm{EMC}(C) - \gamma\, \mathrm{MGC}(C),$$

wobei $\gamma$ beispielsweise eine nicht negative Konstante, z.B. eine nicht negative reale Zahl ist, und $\mathrm{MGC}(C)$ ein Indikator für das Verletzen von Gruppierbedingungen (Multicast Grouping Constraints) ist. Der MGC Indikator würde beispielsweise dann 0 sein, wenn alle Gruppierbedingungen erfüllt sind, und 1 wenn mindestens eine Gruppierbedingung nicht erfüllt ist. Wenn $\gamma$ als unendlich gewählt wird, erzwingt man, dass alle Gruppierbedingungen erfüllt sein müssen. Wenn $\gamma$ als 0 gewählt wird werden keine Gruppierbedingungen betrachtet.

Das oben beschriebene Verfahren wurde in numerischen Simulationen untersucht. Dabei wurden Vorteile gegenüber den aus dem Stand der Technik bekannten Verfahren zum Übertragen einzelnen Video-Ströme gefunden, wie im Folgenden beschrieben werden wird.

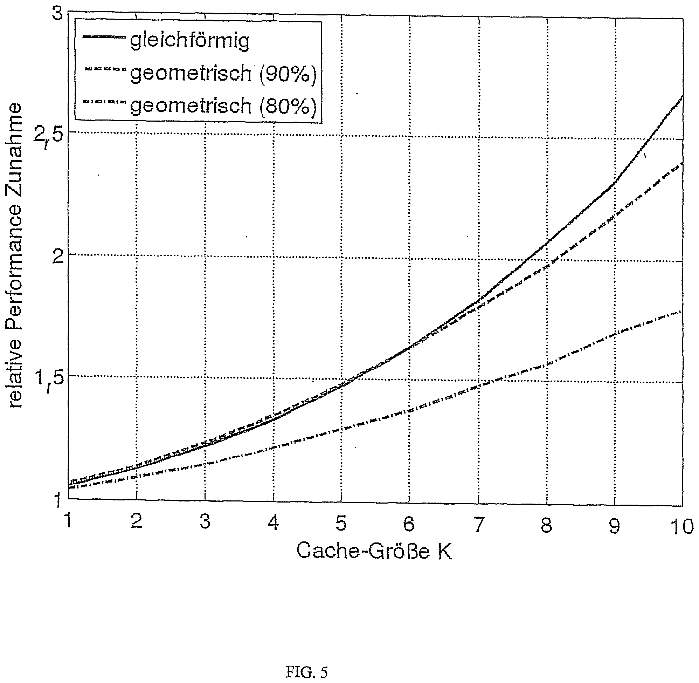

Figur 5 zeigt einen Graph, in dem die relative Performance-Zunahme gegenüber der Cache-Größe $K$ für unterschiedliche Popularitätsverteilungen von angeforderten Inhalten gezeigt ist. Die Performance in der Figur 5 gibt den Kehrwert des $\mathrm{EMC}(C)$, der wiederum als die Summe der notwendigen Übertragungszeiten $\mathrm{EMTT}(G)$ über alle $C$ in $G$ definiert ist, bezogen auf die effektiven Übertragungskosten eines Referenzverfahrens an. Das Referenzverfahren ist dabei derart definiert, dass alle Inhalte individuell an alle Nutzer ausgeliefert werden, ohne Caching, Multicast, etc. Die Kosten dieses Verfahrens sind ebenfalls als die Summe aller notwendigen Übertragungszeiten definiert. In Fig. 5 wurde ein System mit 50 Nutzervorrichtungen untersucht, und die durchschnittliche Performance-Zunahme für unterschiedliche Cache-Größen $K$ betrachtet.

Figur 5 zeigt dabei den Bereich von $K = 1$, bei dem jede Nutzervorrichtung ein Video speichern kann, bis zu $K = 10$. Die durchgezogene Kurve zeigt die Zunahme, wenn alle Nutzervorrichtungen ein Video aus einer gleichförmig beliebten Menge von 20 Videos anfordern. Die unterbrochenen Kurven zeigen die Zunahme, wenn jede Nutzervorrichtung ein Video aus einer beliebig großen Menge von Videos anfordert, deren Popularität geometrisch verteilt ist, so dass mit einer Wahrscheinlichkeit von 90% (gestrichelte Linie) bzw. 80% (Strich-Punkt-Linie) eines der zwanzig populärsten Videos ausgewählt wird. Die Caches sind dabei vollständig gemäß der entsprechenden Popularitätsverteilung der Anforderungen gefüllt. Alle Kurven zeigen eine moderate bis große Zunahme bereits bei kleinen bis moderaten Cache-größen.

In der oben angeführten detaillierten Beschreibung wurden einige Ausführungsformen der vorliegenden Erfindung im Detail beschrieben. Der Fachmann wird allerdings Variationen und Modifikationen der beschriebenen Ausführungsformen erkennen. Die beschriebenen Verfahren oder Teile davon können beispielsweise in einem Access Point, einer Nutzervorrichtung und/oder einem maschinenlesbaren Medium implementiert sein.

Liste der Bezugszeichen

| 10 | Access Point |
| 11 | Cache |
| 12 | FEC-Enkodierer |
| 13 | Steuerungseinheit |
| 20 | Nutzervorrichtung |
| 21 | Cache |
| 22 | FEC-Dekodierer |
| 23 | Nutzerdialogeinheit |
| 30 | Content-Server |
| 41 | angeforderte Dateiblöcke |
| 42 | Content-Listen |
| 43 | Dateiblockanforderungen |
| 51 | enkodierte Datenpakete |

| 52 | Multicast-Gruppen |
| 53 | Content-Listen |
| 54 | Dekodierer-Feedback |
| 55 | Kanalzustände |
| 56 | Cache-Content-Listen |
| 57 | Anfragen |
| 61 | Cache-Content-Liste |
| 62 | Dateiblöcke der Gruppen |
| 63 | Multicast-Gruppen |
| 71 | dekodierte Dateiblöcke |
| 72 | Dateiblöcke der Gruppe aus dem Cache |
| 73 | Anfrage |
| 74 | angefragte Dateiblöcke |
| 102-118 | Verfahrensschritte |

## Patentansprüche

1. Verfahren, das von einem Access Point (10) durchgeführt wird, und bei dem Anfragen von einer Anzahl von Nutzervorrichtungen (20) empfangen werden, wobei jede der Anfragen einen oder mehrere angefragte Dateiblöcke zumindest einer Datei angibt, die nicht in einem Cache der Nutzervorrichtung gespeichert sind, und wobei jede der Anfragen eine Angabe von im Cache (21) der Nutzervorrichtung (20) gespeicherten Datenblöcken enthält, und bei dem eine Menge, C, von Multicast-Gruppen, G, basierend auf den empfangenen Anfragen bestimmt wird, wobei jede der Multicast-Gruppen, G, eine Menge von Indices, {m}, einer oder mehrerer der Nutzervorrichtungen (20) und eine Menge von Indices, {ij}, der Dateiblöcke, die an die Nutzervorrichtungen (20), die in der Multicast-Gruppe, G, indiziert sind, zu übertragen sind, enthält, und bei dem für jede Multicast-Gruppe, G, der Menge, C, die Dateiblöcke, die in der Multicast-Gruppe, G, indiziert sind, abgerufen und enkodiert werden, **dadurch gekennzeichnet, dass** ein Vorwärtsfehlerkorrekturverfahren verwendet wird, und bei dem für jede der Multicast-Gruppen, G, der Menge, C, die in der Multicast-Gruppe, G, indizierten enkodierten Dateiblöcke an die in der Multicast-Gruppe, G, indizierten Nutzervorrichtungen übertragen werden, wobei zumindest zwei der in zumindest einer der Multicast-Gruppen, G, der Menge, C, indizierten Dateiblöcke Teile unterschiedlicher Dateien sind.

2. Verfahren nach Anspruch 1, bei dem zumindest einige der Dateiblöcke, die in den Multicast-Gruppen, G, der Menge, C, indiziert sind, von einem oder mehreren Content-Servern (30) abgerufen werden, wobei insbesondere eine zuverlässige Backhaul-Verbindung zwischen dem Access Point (10) und dem einen oder den mehreren Content-Servern (30) verwendet wird.

3. Verfahren nach einem der vorhergehenden Ansprüche, bei dem mehrere Kandidatenmengen, $C^{neu}$, $C^{add}$, bestimmt werden und die Menge, C, der Multicast-Gruppen, G, basierend auf einem Vergleich eines effektiven Dienstvorteils, ESB, und effektiver Multicast-Kosten, EMC, für jede der Kandidatenmengen, $C^{neu}$, $C^{add}$, bestimmt wird.

4. Verfahren nach Anspruch 3, bei dem der effektive Dienstvorteil, ESB, beruhend auf einer tolerierbaren Verzögerung bei der Übertragung der Dateiblöcke, von den Nutzervorrichtungen (20) empfangenen Prioritäten der Dateiblöcke, vorbestimmten Prioritäten der Nutzervorrichtungen (20) und/oder von den Nutzervorrichtungen (20) empfangenen Quality-of-Service-(QoS)-Erfordernissen bestimmt wird.

5. Verfahren nach Anspruch 3 oder 4, bei dem die effektiven Multicast-Kosten, EMC, basierend auf einer erwarteten Anzahl der Übertragungen, einer erwarteten Gesamtdauer der Übertragungen an die Nutzervorrichtungen (20), die in den Multicast-Gruppen, G, der Menge, C, indiziert sind, Kanalqualitäten von Verbindungen zwischen dem Access Point (10) und den Nutzervorrichtungen (20), die in den Multicast-Gruppen, G, der Menge, C, indiziert sind, und/oder Dauern und Geschwindigkeiten von Übertragungen an die Nutzervorrichtungen (20), die in den Multicast-Gruppen, G, der Menge, C, indiziert sind, bestimmt werden.

6. Verfahren nach einem der vorhergehenden Ansprüche,

   - bei dem zumindest einer der in zumindest einer der Multicast-Gruppen, G, der Menge, C, indizierten Dateiblöcke ein unvollständiger Teil einer Datei ist; und/oder
   - bei dem die enkodierten Dateiblöcke an die in der Multicast-Gruppe, G, indizierten Nutzervorrichtungen (20) über eine unzuverlässige, insbesondere drahtlose, Broadcast-Verbindung übertragen werden; und/oder

- bei dem Informationen über die Multicast-Gruppe, G, an jede Nutzervorrichtung (20), die in der Multicast-Gruppe, G, indiziert ist, übertragen werden, wobei die Informationen über die Multicast-Gruppe, G, insbesondere die in der Multicast-Gruppe, G, indizierten Nutzervorrichtungen (20) und/oder die in der Multicast-Gruppe, G, indizierten Dateiblöcke angeben; und/oder

- bei dem eine Information über einen bei dem Vorwärtskorrekturverfahren verwendeten Vorwärtskorrekturcode an jede Nutzervorrichtung (20), die in der Multicast-Gruppe, G, indiziert ist, übertragen wird.

7. Verfahren nach einem der vorhergehenden Ansprüche, bei dem beim Bestimmen der Menge, C, von Multicast-Gruppen, G, ausgehend von einer anfänglichen Menge, $C_0 = C^{start}$, in einer iterativen Prozedur in jedem Iterationsschritt eine erste Kandidatenmenge, $C^{neu}$, und eine zweite Kandidatenmenge, $C^{add}$, bestimmt werden, und bei dem diejenige aus der ersten und der zweiten Kandidatenmenge als Ergebnismenge für einen Iterationsschritt bestimmt wird, die einen höheren Bewertungswert, P, aufweist, wobei der Bewertungswert, P, einen effektiven Dienstvorteil, ESB, und effektive Multicast-Kosten, EMC, für die Menge berücksichtigt, wobei die iterative Prozedur beendet wird, wenn weder die erste Kandidatenmenge, $C^{neu}$, noch die zweite Kandidatenmenge, $C^{add}$, einen höheren Bewertungswert, P, als die Ergebnismenge für einen vorherigen Iterationsschritt aufweist.

8. Verfahren nach Anspruch 7, bei dem das Bestimmen der ersten Kandidatenmenge, $C^{neu}$, Folgendes umfasst:

(I.) für jede Nutzervorrichtung $m \in U$, von der eine Anfrage empfangen wurde, und für jeden angefragten Dateiblock $ij \in D_m$:

(a) Bilden einer Multicast-Gruppe G' = ({m}, {ij}),
(b) Bilden einer Menge C' = C $\cup$ {G'},
(c) Bestimmen des Bewertungswerts P(C') für C' und

(II.) Bestimmen als erste Kandidatenmenge, $C^{neu}$, diejenige Menge der in Schritt (I.) berechneten Mengen, C', welche den höchsten Bewertungswert, P, aufweist.

9. Verfahren nach Anspruch 7 oder 8, bei dem das Bestimmen der zweiten Kandidatenmenge, $C^{add}$, Folgendes umfasst:

(I.) für jede Gruppe $G_k = (U_k, B_k) \in C_p$ der Ergebnismenge aus dem vorherigen Iterationsschritt und für jeden angefragten Dateiblock $ij \in \cup_{m \in U} D_m$:

(a) Bilden einer Multicast-Gruppe G' = (U', B'), wobei U' = $U_k$ und B' = $B_k \cup$ {ij},
(b) solange der Bewertungswert P(C') zunimmt:

(i) für jede Nutzervorrichtung $m \in U \setminus U'$:

(A) Bilden einer Menge C' = (C $\setminus$ {$G_k$}) $\cup$ {(U' $\cup$ {m}, B')},
(B) Bestimmen des Bewertungswerts P(C') für C' und

(ii) Bestimmen als neues G': G' = (U' $\cup$ {m}, B') für die Nutzervorrichtung m, für die in Schritt (i.) der höchste Bewertungswert bestimmt wurde,

(c) Bilden der Menge C' = (C $\setminus$ {$G_k$}) $\cup$ {(U', B')},
(d) Berechnen des Bewertungswerts P(C') für C',

(II.) Bestimmen als zweite Kandidatenmenge ($C^{add}$) diejenige Menge der in Schritt (I.) gebildeten Mengen C' mit dem höchsten Bewertungswert.

10. Verfahren nach einem der Ansprüche 7 bis 9, bei dem der Bewertungswert, P, für eine Menge, C, von Multicast-Gruppen bestimmt wird als eine monoton zunehmende Funktion des effektiven Dienstvorteils, ESB, bei konstanten effektiven Multicast-Kosten, EMC, und als eine monoton abnehmende Funktion der effektiven Multicast-Kosten, EMC, bei konstantem effektivem Dienstvorteil, ESB, und/oder bei dem der Bewertungswert, P, für eine Menge, C, von Multicast-Gruppen bestimmt wird als eine monoton abnehmende Funktion des effektiven Dienstvorteils, ESB, bei konstanten effektiven Multicast-Kosten, EMC, und als eine monoton zunehmende Funktion der effektiven Multicast-Kosten, EMC, bei konstantem effektivem Dienstvorteil, ESB.

**11.** Verfahren nach einem der Ansprüche 7 bis 10, bei dem der Bewertungswert, P, für eine Menge, C, von Multicast-Gruppen bestimmt wird als

$$P(C) = \alpha \, ESB(C) - \beta \, EMC(C)$$

oder als

$$P(C) = \alpha \, ESB(C) \, / \, EMC(C),$$

wobei ESB der effektive Dienstvorteil für die Gruppe C ist, EMC die effektiven Multicast-Kosten für die Gruppe C sind, und $\alpha$ und $\beta$ Konstanten, insbesondere nicht negative Konstanten, sind.

**12.** Access Point (10), der zum Durchführen eines Verfahrens nach einem der Ansprüche 1 bis 11 eingerichtet ist.

**13.** Verfahren, bei dem eine Nutzervorrichtung (20) eine Eingabe von einem Nutzer empfängt, wobei sich die Eingabe auf zumindest eine angefragte Datei bezieht, und bei dem die Nutzervorrichtung (20) in Reaktion auf das Empfangen der Eingabe eine Anfrage an einen Access Point (10) nach Anspruch 12 überträgt, wobei die Anfrage eine Angabe der zumindest einen angefragten Datei und eine Angabe von Dateiblöcken der zumindest einen angefragten Datei, die nicht in einem Cache (21) der Nutzervorrichtung (20) gespeichert sind, umfasst, wobei die Nutzervorrichtung (20) ferner eine Angabe von in dem Cache (21) gespeicherten Dateiblöcken an den Access Point (10) überträgt, wobei die Nutzervorrichtung einer Multicast-Gruppe, G, angehört, und die Multicast-Gruppe, G, eine Menge von Indices, {m}, einer oder mehrerer Nutzervorrichtungen (20) und eine Menge von Indices, {ij}, der Dateiblöcke, die an die Nutzervorrichtungen (20), die in der Multicast-Gruppe, G, indiziert sind, zu übertragen sind, enthält, **dadurch gekennzeichnet, dass** die Nutzervorrichtung (20) in Reaktion auf das Übertragen der Anfrage die in der Multicast-Gruppe, G, indizierten Dateiblöcke von dem Access Point (10) empfängt und dekodiert, wobei ein Vorwärtskorrekturverfahren verwendet wird und wobei zumindest zwei der in der Multicast-Gruppe, G, indizierten Dateiblöcke Teile unterschiedlicher Dateien sind.

**14.** Nutzervorrichtung (20), die zum Durchführen des Verfahrens gemäß Anspruch 13 eingerichtet ist.

**15.** Maschinenlesbares Medium, das darauf gespeicherte Instruktionen enthält, die, wenn sie von einer Vorrichtung ausgeführt werden, bewirken, dass die Vorrichtung ein Verfahren nach einem der Ansprüche 1 bis 11 oder das Verfahren gemäß Anspruch 13 ausführt.

**Claims**

**1.** Method performed by an access point (10) and in which requests of a number of user devices (20) are received, each of the requests indicating one or multiple requested data blocks of at least one file which are not stored in a cache of the user device, and wherein each of the request contains an indication of data blocks stored in the cache (21) of the user device (20), and in which an set, C, of multicast groups, G, is determined on the basis of the received requests, each of the multicast groups, G, including an set of indices, {m}, of one or multiple user devices (20) and an set of indices, {ij}, of the data blocks which are to be transmitted the user devices (20) which are indexed in the multicast group, G, and in which for each multicast group, G, of the set, C, the data blocks indexed in the multicast group, G, are retrieved and encoded, **characterized in that** a forward correction method is used in which for each of the multicast groups, G, of the set, C, the encoded data blocks indexed in the multicast group, G, are transmitted to the user devices indexed in the multicast group, G, wherein at least two of the data blocks indexed in at least one of the multicast groups, G, of the set, C, are parts of different files.

**2.** Method according to claim 1, wherein at least some of the data blocks, which are indexed in the multicast groups, G, of the set, C, are retrieved from one or multiple content servers (30), wherein in particular a reliable backhaul connection is used between the access point (10) and the one or multiple content servers (30).

**3.** Method according to any of the preceding claims, wherein multiple candidate sets, $C^{neu}$, $C^{add}$, are determined and the set, C, of the multicast groups, G, is determined based on a comparison of an effective service benefit, ESB, and effective multicast costs, EMC, for each of the candidate sets, $C^{neu}$, $C^{add}$.

4.  Method according to claim 3, wherein the effective service benefit, ESB, is determined based on any of a tolerable delay during transmission of the data blocks, of priorities of the data blocks, the priorities being received by the user devices (20), of predetermined priorities of the user devices (20) and/or of quality of service (QoS) requirements received by the user devices (20).

5.  Method according to claims 3 or 4, wherein the effective multicast costs, EMC, are determined based on any of a number of expected transmissions, of an expected total duration of transmission to the user devices (20) indexed in the multicast groups, G, of the set, C, of channel qualities of connections between the access point (10) and the user devices (20) indexed in the multicast groups, G, of the set, C, and/or of durations and transmission speeds to the user devices (20) indexed in the multicast groups, G, of the set, C.

6.  Method according to any of the preceding claims,

    - wherein at least one of the data blocks indexed in at least one of the multicast groups, G, of the set, C, is an incomplete part of a file; and/or
    - wherein the encoded data blocks are transmitted to the user devices (20) indexed in the multicast group, G, via an unreliable, in particular a wireless broadcast connection; and/or
    - wherein information about the multicast group, G, is transmitted to each user device (20) indexed in the multicast group, G, wherein the information about the multicast group, G, indicates in particular the user devices (20) indexed in the multicast group, G, and/or the data blocks indexed in the multicast group, G; and/or
    - wherein information about a forward correcting code used with the forward correcting method is transmitted to each user device (20) indexed in the multicast group, G.

7.  Method according any of the preceding claims, wherein during determining the set, C, of multicast groups, G, starting from an initial set, $C_0 = C^{start}$, using an iterative procedure in each iteration step a first candidate set, $C^{neu}$, and a second candidate set, $C^{add}$, are determined, and wherein that of the first and second candidate sets is determined as a result set for an iteration step that has a higher assessment value, P, wherein the assessment value, P, takes into account an effective service benefit, ESB, and effective multicast costs, EMC, for the set, wherein the iterative procedure is terminated, if neither the first candidate set, $C^{neu}$, nor the second candidate set, $C^{add}$, has a higher assessment value, P, than the result set for the previous iteration step.

8.  Method according to claim 7, wherein determining the first candidate set, $C^{neu}$, comprises:

    (I.) for each user device $m \in U$, from which a request was received, and for each requested data block $ij \in D_m$:

        (a) forming a multicast group G' = ({m}, {ij}),
        (b) forming a set C' = C $\cup$ {G'},
        (c) determining the assessment value P(C') for C' and

    (II.) determining, as a first candidate set, $C^{neu}$, that set of the sets, C', calculated in step (I.) which has the highest assessment value, P.

9.  Method according to claim 7 or 8, wherein determining the second candidate set, $C^{add}$, comprises:

    (I.) for each group $G_k = (U_k, B_k) \in C_p$ of the result set of the previous iteration step and for each requested data block $ij \in \cup_{m \in U} D_m$:

        (a) forming a multicast group G' = (U', B'), wherein $U' = U_k$ and $B' = B_k \cup$ {ij},
        (b) for as long as the assessment value P(C') increases:

            (i) for each user device $m \in U \setminus U'$:

                (A) forming a set C' = (C $\setminus$ {$G_k$}) $\cup$ {(U' $\cup$ {m}, B')},
                (B) determining the assessment value P(C') for C' and

            (ii) determining as a new G': G' = (U' u {m}, B') for the user device m for which the highest assessment value was determined in step i.,

(c) forming the set C' = (C \ {G$_k$}) $\cup$ {(U', B')},
(d) calculating the assessment value P(C') for C',

(II.) determining as a second candidate set (C$^{add}$) that set of the sets C' that was formed in step (I.) having the highest assessment value.

10. Method according to any of the claims 7 to 9 , wherein the assessment value, P, for a set, C, of multicast groups is determined as monotone increasing function of the effective service benefit, ESB, with constant effective multicast costs, EMC, and as a monotone decreasing function of the effective multicast costs, EMC, with constant effective service benefit, ESB, and/or wherein the assessment value, P, for a set, C, of multicast groups is determined as a monotone decreasing function of the effective service benefit, ESB, with constant effective multicast costs, EMC, and as a monotone increasing function of the effective multicast costs, EMC, with constant effective service benefit, ESB.

11. Method according to any of the claims 7 to 10, wherein the assessment value, P, for a set, C, of multicast groups is determined as

$$P(C) = \alpha\, ESB(C) - \beta\, EMC(C)$$

or as

$$P(C) = \alpha\, ESB(C)\, /\, EMC(C),$$

wherein ESB designates the effective service benefit for group C, EMC designates the effective multicast costs for group C, and $\alpha$ and $\beta$ are, preferably non-negative, constants.

12. Access point (10) configured for performing the method according to any of the claims 1 to 11.

13. Method wherein a user device (20) receives an input of a user, the input referring to at least one requested file; the user device (20) transmits, as a reaction to receiving the input, a request to an access point (10) according to claim 12, the request including information about the at least one requested file and information about data blocks, which are not being stored in a cache (21) of the user device (20), of the at least one requested file, wherein the user device (20) further transmits information about data blocks stored in the cache (21) to the access point (10), wherein the user device belongs to a multitask group, G, and the multitask group, G, contains a set of indices, {m}, of one or multiple user devices (20) and a set of indices, {ij}, of the data blocks to be transmitted to the user devices (20) which are indexed in the multicast group, G, **characterized in that** the user device (20), in reaction to transmitting the request receives from the access point (10) the data blocks indexed in the multicast group, G, and decodes the data blocks, wherein a forward correcting method is used an wherein at least two of the data blocks indexed in the multicast group, G, are parts of different files.

14. User device (20) configured for performing the method according to claim 13.

15. Machine-readable medium comprising stored instructions that, when executed in a device cause the device to perform the method according to any of the claims 1 to 11 or the method according to claim 13.

**Revendications**

1. Procédé exécuté par un point d'accès (10) et dans lequel des requêtes d'un certain nombre de dispositifs utilisateurs (20) sont reçues, chacune des requêtes indiquant un ou plusieurs blocs de données demandés d'au moins un fichier qui ne sont pas stockés dans un cache du dispositif utilisateur, et dans lequel chacune des requêtes contient une indication de blocs de données stockés dans le cache (21) du dispositif utilisateur (20), et dans lequel un ensemble, C, de groupes de multidiffusion, G, est déterminé sur la base des requêtes reçues, chacun des groupes de multidiffusion, G, incluant un ensemble d'indices, {m}, d'un ou plusieurs dispositifs utilisateurs (20) et un ensemble d'indices, {ij}, des blocs de données à transmettre aux dispositifs utilisateurs (20) qui sont indexés dans le groupe de multidiffusion, G, et dans lequel, pour chaque groupe de multidiffusion, G, de l'ensemble, C, les blocs de données indexés dans le groupe de multidiffusion, G, sont extraits et codés, **caractérisé en ce qu'**on utilise un procédé de correction avant et dans lequel pour chacun des groupes de multidiffusion, G, de l'ensemble, C, les blocs de données codées indexés dans le groupe de multidiffusion, G, sont transmis aux dispositifs utilisateurs indexés dans le groupe de multidiffusion, G, où au moins deux des blocs de données indexés dans au moins un des groupes de multidiffusion, G, de l'ensemble, C, font partie de fichiers différents.

2. Procédé selon la revendication 1, dans lequel au moins une partie des blocs de données indexés dans les groupes de multidiffusion, G, de l'ensemble, C, sont extraits d'un ou de plusieurs serveurs de contenu (30), dans lequel on utilise en particulier une liaison backhaul fiable entre le point d'accès (10) et un ou plusieurs serveurs de contenu (30).

3. Procédé selon l'une quelconque des revendications précédentes, dans lequel plusieurs ensembles candidats, $C^{neu}$, $C^{add}$, sont déterminés et l'ensemble, C, de groupes de multidiffusion, G, est déterminé sur la base d'une comparaison d'un avantage de service effectif, ESB, et de coûts effectifs de multidiffusion, EMC, pour chacun des ensembles candidats, $C^{neu}$, $C^{add}$.

4. Procédé selon la revendication 3, dans lequel l'avantage de service effectif, ESB, est déterminé, sur la base d'un retard tolérable quelconque pendant la transmission des blocs de données, par des priorités des blocs de données reçues par les dispositifs utilisateurs (20), par des priorités prédéterminées des dispositifs utilisateurs (20) et/ou par des exigences de qualité de service (QoS) reçues par les dispositifs utilisateurs (20).

5. Procédé selon les revendications 3 ou 4, dans lequel les coûts effectifs de multidiffusion, EMC, sont déterminés sur la base d'un nombre quelconque d'émissions attendues, d'une durée totale attendue de transmission aux dispositifs utilisateurs (20) indexés dans les groupes de multidiffusion, G, de l'ensemble, C, des qualités de canal des connexions entre le point d'accès (10) et les dispositifs utilisateurs (20) indexés dans les groupes multidiffusion, G, de l'ensemble, C et/ou de durées et vitesses de transmission aux dispositifs utilisateurs (20) indexés dans les groupes de multidiffusion, G, de l'ensemble, C.

6. Procédé selon l'une quelconque des revendications précédentes,

   - dans laquelle au moins un des blocs de données indexés dans au moins un des groupes de multidiffusion, G, de l'ensemble, C, est une partie incomplète d'un fichier; et/ou
   - dans laquelle les blocs de données codés sont transmis aux dispositifs utilisateurs (20) indexés dans le groupe de multidiffusion, G, par l'intermédiaire d'une connexion de diffusion non fiable, en particulier sans fil; et/ou
   - dans laquelle des informations sur le groupe de multidiffusion, G, sont transmises à chaque dispositif utilisateur (20) indexé dans le groupe de multidiffusion, G, les informations sur le groupe de multidiffusion, G, indiquant en particulier les dispositifs utilisateurs (20) indexés dans le groupe de multidiffusion, G, et/ou les blocs de données indexés dans le groupe de multidiffusion G; et/ou
   - dans laquelle des informations sur un code de correction vers l'avant utilisé avec le procédé de correction vers l'avant sont transmises à chaque dispositif utilisateur (20) indexé dans le groupe de multidiffusion, G.

7. Procédé selon l'une quelconque des revendications précédentes, dans lequel, pendant la détermination de l'ensemble, C, de groupes multidiffusion, G, à partir d'un ensemble initial, $C_0 = C^{start}$, en utilisant une procédure itérative dans chaque étape d'itération, un premier ensemble candidat, $C^{neu}$, et un second ensemble candidat, $C^{add}$, sont déterminés, et dans lequel celui des premier et second ensembles candidats est déterminé comme un résultat établi pour une étape d'itération qui a une valeur d'évaluation supérieure, P, où la valeur d'évaluation, P, prend en compte un avantage de service effectif, ESB, et des coûts effectifs de multidiffusion, EMC, pour l'ensemble, où la procédure itérative est terminée, si ni le premier ensemble candidat, $C^{neu}$, ni le deuxième ensemble candidat, $C^{add}$, ne possède une valeur d'évaluation, P, supérieure au résultat défini pour l'étape précédente.

8. Procédé selon la revendication 7, dans lequel la détermination du premier ensemble candidat, $C^{neu}$, comprend:

   (I.) pour chaque dispositif utilisateur $m \in U$, à partir duquel une demande a été reçue, et pour chaque bloc de données demandé $ij \in D_m$:

   (a) formation d'un groupe de multidiffusion G' = ({m}, {ij}),
   (b) formation d'un ensemble C' = C $\cup$ {G'},
   (c) détermination de la valeur imposable P(C') pour C' et

(II.) détermination, comme premier ensemble candidat, $C^{neu}$, cet ensemble d'ensembles, C', calculé à l'étape (I.) qui a la valeur d'évaluation, P, la plus élevée.

9. Procédé selon la revendication 7 ou 8, dans lequel la détermination du deuxième ensemble candidat, $C^{add}$, comprend :

(I.) pour chaque groupe $G_k = (U_k, B_k) \in C_p$ de l'ensemble de résultats de l'itération précédente et pour chaque bloc de données demandé $ij \in \cup_{m \in U} D_m$:

(a) formation d'un groupe de multidiffusion G' = (U', B'), où U' = $U_k$ et B' = $B_k \cup \{ij\}$,
(b) aussi longtemps que la valeur d'évaluation P(C') augmente:

(i) pour chaque dispositif utilisateur $m \in U \setminus U'$:

(A) former un ensemble C' = $(C \setminus \{G_k\}) \cup \{(U' \cup \{m\}, B')\}$,
(B) déterminer la valeur d'évaluation P(C') pour C' et

(ii) déterminer comme nouveau G':G' = $(U' \cup \{m\}, B')$ pour le dispositif utilisateur m pour lequel la valeur d'évaluation la plus élevée a été déterminée à l'étape (i.),

(c) former l'ensemble C' = $(C \setminus \{G_k\}) \cup \{(U', B')\}$,
(d) calcul de la valeur d'évaluation P(C') pour C',

(II.) déterminer comme deuxième ensemble candidat ($C^{add}$) l'ensemble des ensembles C' qui a été formé à l'étape I. ayant la valeur d'évaluation la plus élevée.

10. Procédé selon la revendication 7 à 9, dans lequel la valeur d'évaluation, P, pour un ensemble, C, de groupes de multidiffusion est déterminée comme fonction monotone croissante de l'avantage effectif de service, ESB, avec des coûts effectifs constants de multidiffusion, EMC, et comme fonction monotone décroissante des coûts effectifs de multidiffusion, EMC, avec avantage effectif constant de service, ESB, et/ou dans lequel la valeur d'évaluation, P, pour un ensemble, C, de groupes de multidiffusion est déterminée comme une fonction décroissante monotone de l'avantage effectif du service, ESB, avec des coûts effectifs constants de multidiffusion, EMC, et comme une fonction croissante monotone des coûts effectifs de multidiffusion, EMC, avec un avantage effectif constant du service, ESB.

11. Procédé selon l'une quelconque des revendications 7 à 10, dans lequel la valeur d'évaluation, P, pour un ensemble, C, de groupes de multidiffusion est déterminée comme suit

$$P(C) = \alpha \, ESB(C) - \beta \, EMC(C)$$

ou comme

$$P(C) = \alpha \, ESB(C) \, / \, EMC(C),$$

dans lequel ESB désigne l'avantage effectif de service pour le groupe C, EMC désigne les coûts effectifs de multidiffusion pour le groupe C, et $\alpha$ et $\beta$ sont des constantes, de préférence non négatives.

12. Point d'accès (10) configuré pour exécuter la méthode selon l'une quelconque des revendications 1 à 11.

13. Procédé dans lequel
un dispositif utilisateur (20) reçoit une entrée d'un utilisateur, l'entrée se référant à au moins un fichier demandé, et dans lequel le dispositif utilisateur (20) transmet, en réaction à la réception de l'entrée, une demande à un point d'accès (10) selon la revendication 12, la demande comprenant des informations sur le au moins un fichier demandé et des informations sur les blocs de données, qui ne sont pas stockés dans un cache (21) du dispositif utilisateur (20), du au moins un fichier demandé, dans lequel le dispositif utilisateur (20) transmet en outre des informations sur les blocs de données stockés dans le cache (21) au point d'accès (10), le dispositif utilisateur appartenant au groupe de multidiffusion, G et le groupe de multidiffusion, G, contient un ensemble d'indices, {m} d'un ou plusieurs dispositifs utiliseurs (20) et un ensemble d'indices, {ij}, des blocs de données à transmettre aux dispositifs utilisateurs (20) qui sont indexés dans le groupe de multidiffusion, G, **caractérisé en ce que** le dispositif utilisateur (20), en réaction à la transmission de la demande, reçoit du point d'accès (10) les blocs de données indexés dans le groupe de multidiffusion, G, et décode les blocs de données, un procédé de correction avant étant utilisé et au moins deux des blocs de données indexés dans le groupe de multidiffusion, G, faisant partie de fichiers différents.

14. Dispositif utilisateur (20) configuré pour exécuter le procédé selon la revendication 13.

15. Support lisible par machine comprenant des instructions stockées qui, lorsqu'elles sont exécutées dans un dispositif, font que le dispositif exécute le procédé selon l'une quelconque des revendications 1 à 11 ou le procédé selon la revendication 13.

FIG. 1

20

FIG. 2

FIG. 3

Fig. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100023525 A1

**In der Beschreibung aufgeführte Nicht-Patentliteratur**

- CPM Adaptive Video-on-Demand with Cooperative Peer Assists and Multicast. **GOPALAKRISHNAN et al.** The 28th Conference on Computer Communications. IEEE, 91-99